# EUROPEAN PATENT SPECIFICATION

(11) **EP 1 161 806 B1**
(45) Date of publication and mention of the grant of the patent: **11.07.2012**
(21) Application number: 00913279.6
(22) Date of filing: 28.01.2000
(51) Int. Cl.: H04L 29/06, H04L 9/08, H04L 12/22

(54) **KEY MANAGEMENT FOR TELEPHONE CALLS TO PROTECT SIGNALING AND CALL PACKETS BETWEEN CTA'S**
SCHLÜSSELVERWALTUNG FÜR TELEPHONANRUFE ZUM SCHUTZ VON SIGNALISIERUNGS- UND ANRUFPAKETEN ZWISCHEN CTA'S
GESTION DE CLES D'APPELS TELEPHONIQUES POUR PROTEGER LES PAQUETS D'APPELS ET DE SIGNALISATION ENTRE DES CTA

(30) Priority: 29.01.1999 US 117788 P; 09.04.1999 US 128772 P
(43) Date of publication of application: 12.12.2001
(60) Divisional application: 11152312.2
(73) Proprietor: GENERAL INSTRUMENT CORPORATION, Horsham, Pennsylvania 19044 (US)
(72) Inventor: MEDVINSKY, Sasha, San Diego, CA 92129 (US); ANDERSON, Steven, E., San Diego, CA 92037 (US); MORONEY, Paul, Olivenhain, CA 92024 (US); SPRUNK, Eric, Carlsbad, CA 92009 (US); FELLOWS, Jonathan, A., Del Mar, CA 92014 (US)
(74) Representative: Bohnenberger, Johannes
(86) International application number: PCT/US2000/002174
(87) International publication number: WO 2000/045539

(56) References cited:
- EP-A- 0 400 362
- WO-A-98/59467
- US-A- 5 371 794
- US-A- 5 410 602
- US-A- 5 539 824
- US-A- 5 557 678
- US-A- 5 600 722
- US-A- 5 812 671
- US-A- 5 825 888
- US-A- 5 974 043
- US-A- 5 999 525
- "Security and encryption for H-series (H.323 and other H.245-based) multimedia terminals; H.235 (02/98)" ITU-T STANDARD, INTERNATIONAL TELECOMMUNICATION UNION, GENEVA, CH, 1 February 1998 (1998-02-01), XP017401338
- SCHNEIER BRUCE, "Bruce Cryptography: Protocols, Algorithms and Source Code in C", October 1995, pages 97-100, 181-182, ISBN: 0-471-12845-7, XP002928317.

## Description

### FIELD OF THE INVENTION

This invention relates to the field of communication in telephony networks, and more particularly, to the establishment of a secure communication channel between users in an IP telephony network.

### BACKGROUND OF THE INVENTION

Internet Protocol (IP) telephony networks allow large numbers of users to communicate with each other over secure channels. Typically, a user is coupled to the IP telephony network via a telephony adapter (TA). In a cable IP networks, a cable telephony adapter (CTA) may be used. The CTA converts user information, such as voice or data, into packets for transmission on the network, and converts received packets into digital or analog signals for use by the user.

An exemplary method of establishing communications over IP telephony networks is found in the International patent application WO-98/59467-A.

To implement a secure channel between two users in the IP telephony network, their associated CTAs use the same encryption techniques and keys. However, this presents a problem since for CTA to CTA communications, there is a very large number (millions) of possible connections that may be established. Thus, any single CTA cannot possibly maintain security associations for all possible connections ahead of time. Therefore a security association (e.g. encryption key) must be established on the flywhen the secure channel (phone call) is first set up.

Standard techniques to establish CTA to CTA communications provide secure key exchanges (authenticated and confidential), and use one of two techniques. In the first technique, a known key is shared between the two parties. As stated above, this technique does not scale to millions of users and is therefore not applicable for general IP telephony networks. The second technique, uses a public key technique, such as Diffie-Hellman exchanges in combination with digital signatures. Such techniques are costly in terms of time and CPU consumption and may cause a noticeable delay in call setup or increase the cost of the CTA device. Thus, public key techniques are not desirable for this purpose.

The European patent application EP-0400362-A discloses a method for establishing encrypted communications over a telephony network, wherein the telephone exchange associated to the originating party generates and distributes a session key that is then used by the originating and terminating parties to encrypt the communication.

The ITU-T standard "Security and encryption for H-series (H.323 and other H. 245-based) multimedia terminals; H.235 (02/98)" discloses methods for establishing a secure communication over IP telephony networks.

### SUMMARY OF THE INVENTION

The present invention provides a method for establishing secure communication between users in an IP telephony network. In IP telephony networks, gateway controllers are used to control messaging between the users and the IP telephony network infrastructure.

The IP telephony network included in the present invention provides a gateway controller that creates a media stream encryption key that is used to encrypt and decrypt messages between users. When a first user attempts to establish a secure channel with a second user, the gateway controller (source) associated with the first user, creates the media stream encryption key, sends the key inside a signaling message to the gateway controller (destination) that services the second user. The two gateway controllers then send the key to the two CTAs, that service the first and second users. This allows the two CTAs, and thus, the two users to quickly establish a secure communication channel in the IP telephony network.

In an embodiment of the present invention a method for establishing a secure communication channel between a first user and a second user in an IP telephony network is provided. The first user and the second user are coupled to first and second telephony adapters, which in turn, are coupled to first and second gateway controllers, respectively, wherein the gateway controllers control user access to the IP telephony network. The telephony adapters are used to encrypt and decrypt user information exchanged over the IP telephony network. The method begins by receiving a request at the first gateway controller to establish a secure communication channel between the first user and the second user. Next, a secret key is generated at the first gateway controller. A copy of the secret key is distributed to the first and second telephony adapters over previously established secure connections. Finally, the secure communication channel is established between the first user and the second user by encrypting and decrypting information using the secret key.

A further understanding of the nature and the advantages of the inventions disclosed herein may be realized by reference to the remaining portions of the specification and the attached drawings.

### BRIEF DESCRIPTION OF THE DRAWINGS

FIG. 1 shows a portion of an IP telephony network constructed in accordance with the present invention;
FIG. 2 shows a gateway controller constructed in accordance with the present invention.
FIG. 3 shows a message flow diagram illustrating message flow in the IP telephony network of FIG. 1 in accordance with the present invention;
FIG. 4 shows a method for establishing a secure communication channel between users in the IP telephony network of FIG. 1 using the messages shown in FIG. 3; and
FIG. 5 shows the IP telephony network of FIG. 1 and includes a connection to a plain old telephone system (POTS) gateway.

### DESCRIPTION OF THE SPECIFIC EMBODIMENTS

The present invention includes a system for establishing a secure communication channel between users of an IP telephony network. Embodiments of the present invention utilize key-based encryption techniques as a mechanism for achieving secure communication in the IP telephony network. Such embodiments are not limited to using any one encryption technique, and therefore, it is possible to construct embodiments of the present invention using several types of encryption techniques. Since the type of encryption technique selected is not essential to the embodiments of the present invention, a detailed description of a specific encryption technique is not provided.

For purposes of clarity and convenience, it will be assumed that the IP telephony network is a cable network, and so, cable telephony adapters (CTA) will be used in the various embodiments. However, the invention is not limited to using CTAs, and may in fact be implemented using any other type of telephony adapters as required by a particular network.

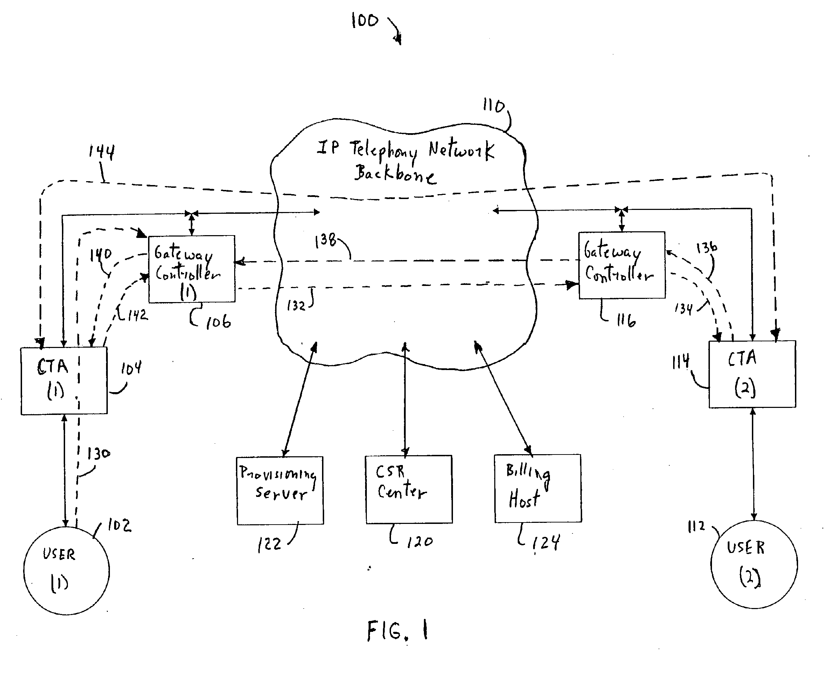

FIG. 1 shows a portion of an IP telephony network 100 constructed in accordance with the present invention. The network 100 includes a first user 102 coupled to a source CTA 104. The source CTA 104 is further coupled to a source gateway controller 106 and an IP telephony network backbone 110.

The network 100 also includes a second user 112 coupled to a destination CTA 114. The destination CTA 114 is further coupled to a destination gateway controller 116 and the IP telephony network backbone 110. In addition, the network 100 also includes a customer service representative (CSR) center 120, a provisioning server 122 and a billing host 124.

Each user of the network 100 goes through an initialization process to activate network service. For example, when the user 102 and associated CTA 104 are coupled to the network, a series of messages are exchanged between the CTA 104, the gateway controller 106 and the CSR 120. The messages provide for activation of telephony service for the user 102, establishment of account information and creation of encryption keys to be used by the CTA to encrypt and decrypt messages exchanged over the network. The billing host 124 is used to setup account information for each user and to bill for network usage. The provisioning server 122 is used to initialize and register CTA devices within a specific IP telephony network.

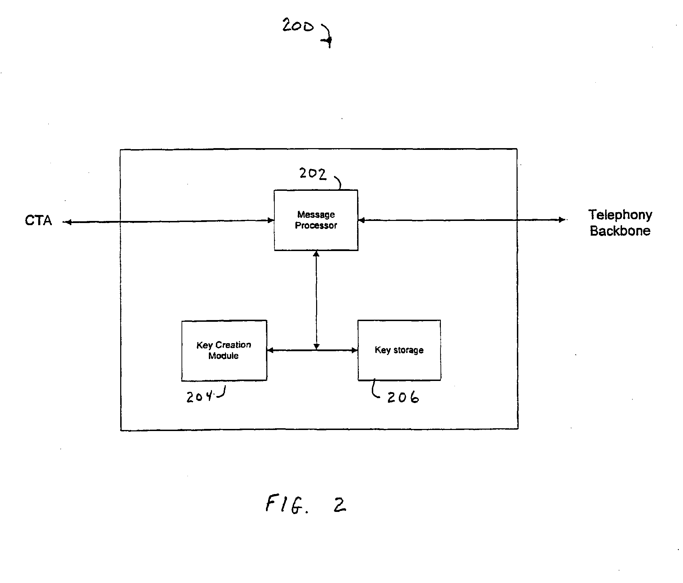

FIG. 2 shows one embodiment of a gateway controller 200 constructed in accordance with the present invention. The gateway controller 200 includes a message processor 202, a key creation module 204 and a key storage 206. The gateway controller 200 is coupled between the IP telephony backbone and a network adapter, such as a CTA device. For example, the gateway controller 200 is suitable for use as the gateway controller 106 in FIG. 1.

The message processor 202 processes messages that are exchanged between the CTA and other components of the telephony network. For example, when messages are exchanged between the CTA and other components of the network during an initial CTA registration process.

The key creation module 204, has logic to create or derive keys that may be used to encrypt or decrypt messages exchanged between CTAs over the IP telephony backbone 110. The keys may be stored in the key storage 206. The key storage has logic to encrypt the keys before storage using a public/private key pair. For example, the public/private key pair may be provided by the network 100 infrastructure or from government law enforcement officials.

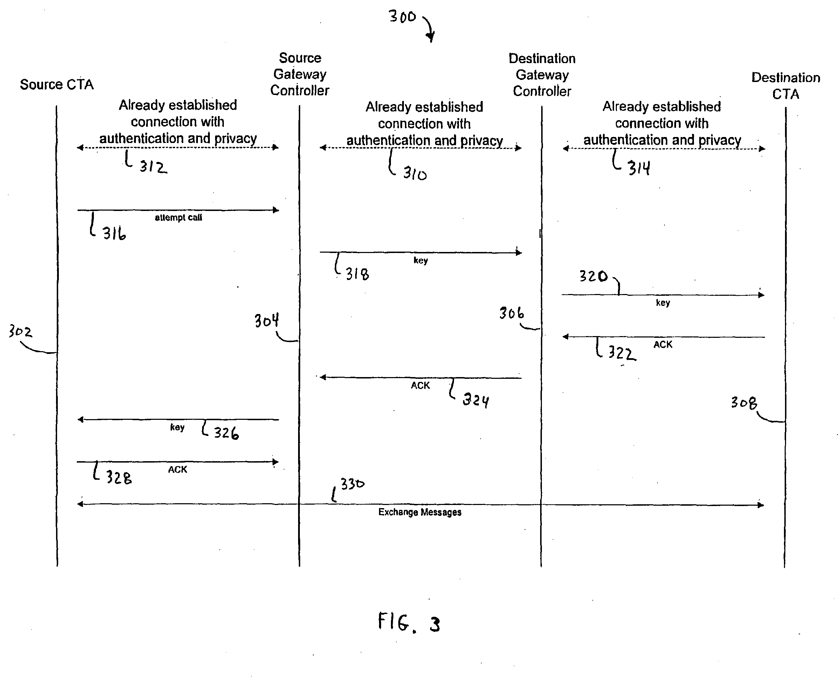

FIG. 3 shows a message exchange diagram 300 illustrating how messages are exchanged between the components of the network 100 to establish a secure communication channel between the user 102 and the user 112. The messages are transmitted or received at the source CTA represented at line 302, the source gateway controller 106 represented at line 304, the destination gateway controller 116 represented at line 306, and the destination CTA 114 represented at line 308.

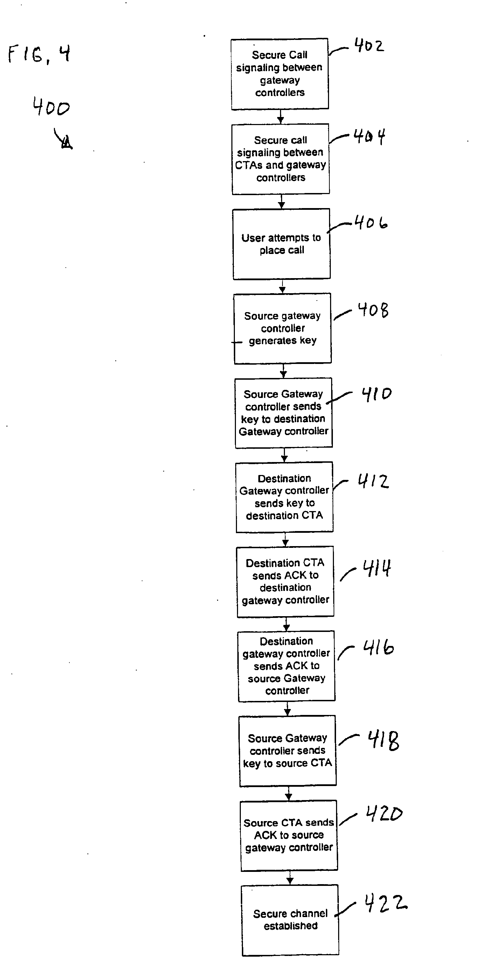

FIG. 4 shows a flow diagram 400 illustrating the process of establishing a secure communication channel utilizing the messages shown in FIG. 3 in accordance with the present invention.

At block 402, secure call signaling between the source and destination gateway controllers is established as shown by message 310. At block 404, secure call signaling between source and destination CTAs and their associated gateway controller is established as shown by messages 312 and 314.

At block 406, the user 102 desires to place a secure call to the user 112 and so notifies the CTA 104 which in turn notifies the gateway controller 106, as shown by message 316 and at path 130. At block 408, the source gateway controller creates a key to be used to establish the secure communication channel requested by the user 102. In one embodiment, the key is a random number and may be generated, for example, at the key creation module 204.

At block 410, the key is transmitted from the source gateway controller to the destination gateway controller, as shown by message 318 and at path 132. At block 412, the destination gateway controller forwards the key to the destination CTA as shown by message 320 and at path 134. At block 414, the destination CTA sends an acknowledgment to the destination gateway controller indicating that the key has been received, as shown by message 322 at path 136.

At block 416, the destination gateway controller sends an acknowledgment to the source gateway controller indicating that the key has been received, as shown by message 324 at path 138. At block 418, the source gateway controller transmits the key to the source CTA, as shown by message 326 at path 140. At block 420, the source CTA responds by transmitting an acknowledgment as shown by message 328 at path 142.

At block 422, a secure channel between the source CTA and the destination CTA can now be established where encrypted messages can be exchanged between the telephony users 102 and 112, as shown by message 330 at path 144.

As a result of the above described operations, the source gateway controller creates an encryption key and distributes it to the source and destination CTAs to quickly set up a secure communication channel thereby allowing the user 102 and the user 112 to communicate over the IP telephony network 100. In one embodiment the messages distributing the key are additional messages used to operate the network 100. In another embodiment, the key may be incorporated into existing call signaling messages so as to keep of the overall message overhead low and improve network efficiency.

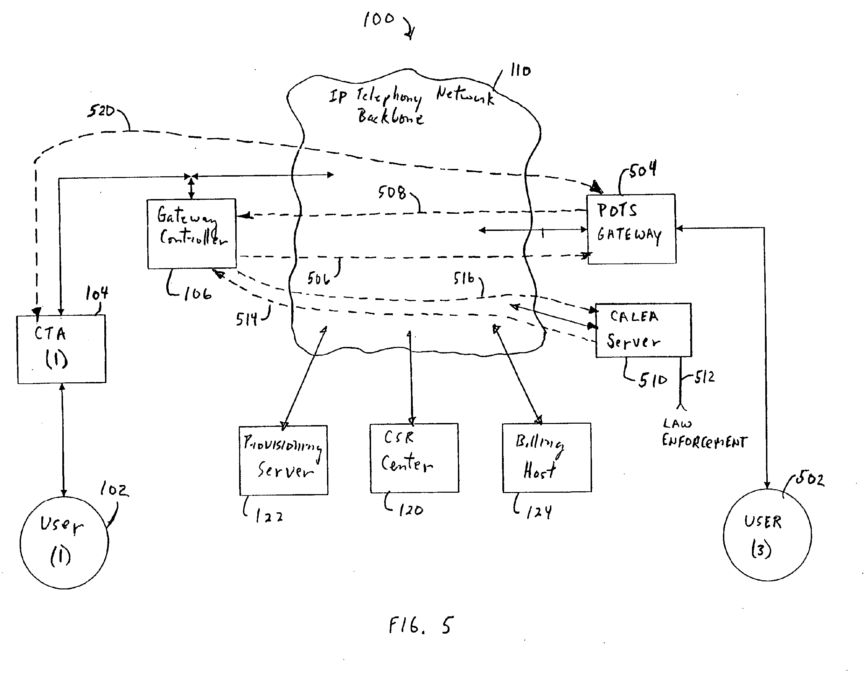

FIG. 5 shows the IP telephony network 100 of FIG. 1 and includes a connection to a plain old telephone system (POTS) gateway 504. The POTS gateway 504 is coupled to a third user 502 of the network 100.

To establish a secure communication channel between the user 102 and the user 502, the method of FIG. 4 can be used, however, since there is no destination CTA, operations relating to the destination CTA are not used. For example, the POTS gateway can provide a private and authenticated connection. Thus, the following describes the differences in the call setup process when using the POTS gateway.

At block 410, the source gateway controller sends the key to the POTS gateway 504, as shown by path 506. The blocks 412 and 414 are skipped. At block 416, the POTS gateway sends an acknowledge signal to the source gateway controller as shown by path 508. Blocks 418 through 422 remain the same.

Using the above modifications to the method of FIG. 4, a private and authenticated secure channel can be established between the CTA 104 and the POTS gateway 504, as shown at path 520, so that the users 102 and 504 may exchange messages.

In another embodiment of the present invention, where the call origination is reversed, the encryption key can be requested from the destination gateway. For example, the user 502 requests to make a call to user 102. The POTS gateway 504 requests the encryption key from the gateway controller 106, which services the user 102. The gateway controller 106 then creates the encryption key and provides it to the POTS gateway to allow a secure communication channel to be created between the POTS gateway and the CTA 104.

In another embodiment of the present invention, the encryption key can be created at the source gateway controller by deriving it from a secret already shared between the source gateway controller and the source CTA. Thus, both the source gateway controller and the source CTA can derived the key from the shared secret. In this embodiment, it is not necessary for the source gateway controller to transmit the key to the source CTA after it has been distributed to the destination CTA. This results in fewer messages being exchanged to setup the secure channel between the users.

In another embodiment of the present invention, the key created at the source gateway controller can be shared with law enforcement. The Communications Assistance for Law Enforcement Act (CALEA) requires that phone systems allow the government access to conversations flowing within their networks for wire-tapping purposes. To facilitate this, a CALEA server 510 may be included in the network 100 as shown in FIG. 5. The CALEA server can be accessed by law enforcement, either directly, as shown by 512, or from some other location within the network 100.

The source gateway controller may operate in several ways to comply with the CALEA requirements. In a first method of operation, the source gateway controller receives a request 514 from the CALEA server to forward any key created for use with a particular user. For example, when the user 102 requests to make a call and a key is created, the key is transmitted to the CALEA server, as shown at 516. In a second method of operation, the source gateway controller receives a request 514 to forward any key currently being used by a particular user. For example, if the user 102 already has a call established using a particular key, that key is transmitted to the CALEA server, as shown at 516. In a third method of operation, the source gateway controller receives a request 514 to forward any key previously used by a particular user. For example, if the user 102 had previously made a call using a particular key, that key is stored in the key storage 206 of the gateway controller. The key is retrieved from the key storage and transmitted to the CALEA server as shown at 516.

In one embodiment, the keys are encrypted prior to storage. The encryption is done using a public/private key pair belonging to law enforcement. Thus, upon retrieval, any keys so encrypted can only be decrypted by law enforcement officials with knowledge of the private key.

Once the key is at the CALEA server, messages are redirected by the network to the server so that they may be decoded using the key and monitored by law enforcement officials. Thus, embodiments of the gateway controller of the present invention includes support for the CALEA requirements.

The present invention provides a method and an IP telephony network for establishing a secure communication channel between two users. It will be apparent to those with skill in the art that modifications to the above methods and embodiments can occur without deviating from the scope of the present invention. Accordingly, the disclosures and descriptions herein are intended to be illustrative, but not limiting, of the scope of the invention which is set forth in the following claims.

## Claims

1. A method for establishing a secure communication channel (144) in an IP telephony network between a first (102) and a second (112) user, wherein the first user and the second user are coupled to first (104) and second (114) telephony adapters, which in turn, are coupled to first (106) and second 116) gateway controllers, respectively, wherein the gateway controllers control user access to the IP telephony network, and wherein the telephony adapters encrypt and decrypt user information exchanged over the IP telephony network, the method comprising:
- receiving a request (316) at the first gateway controller (106) to establish a secure communication channel between the first user (102) and the second user (112);
- generating (408) a secret key at the first gateway controller (106);
- distributing (410, 418) the secret key to the first and second telephony adapters over previously established secure connections; and
- establishing (422) the secure communication channel (144) between the first (102) user and the second user (112) by encrypting and decrypting information using the secret key;
- wherein, the secure channel (144) is provided directly between the first and second telephony adapters.

2. The method of claim 1, wherein the step of generating comprises a step of generating a random number at the first gateway controller to be used as the secret key.

3. The method of claim 1, wherein the step of generating comprises a step of deriving the secret key at the first gateway controller, wherein the secret key is derived from a signalling key shared between the first telephony adapter and the first gateway controller.

4. The method of claim 1, wherein the step of distributing comprises steps of:
- transmitting the secret key from the first gateway controller to the second gateway controller;
- transmitting the secret key from the second gateway controller to the second telephony adapter;
- transmitting the secret key from the first gateway controller to the firs telephony adapter.

5. The method of claim 1, further comprising steps of:
- receiving a request at the first gateway controller to provide the secret key to a law enforcement server; and
- providing the secret key to the law enforcement server.

6. An IP telephony network for establishing a secure communication channel (144) between a first user (102) and a second user (112), wherein the first user (102) and the second user are coupled to first (104) and second (114) telephony adapters, which in turn, are coupled to first (106) and second (116) gateway controllers, respectively, wherein the gateway controllers control user access to an IP telephony backbone, and wherein the telephony adapters encrypt and decrypt user information exchanged over the IP telephony network, the IP telephony network comprising:
- means (202) for receiving a request (316) at the first gateway controller (106) to establish the secure communication channel (114) between the first user (102) and the second user (112);
- means (204) for generating a secret key at the first gateway controller;
- means for distributing the secret key to the first and second telephony adapters over a previously established secure connection; and
- means, at the first (104) and second (114) telephony adapters, for establishing the secure communication channel between the first user (102) and the second user (112) by encrypting and decrypting information using the secret key,
- wherein, the secure channel (144) is provided directly between the first (104) and second (114) telephony adapters.

## Patentansprüche

1. Verfahren zum Herstellen eines sicheren Kommunikationskanals (144) in einem IP-Fernsprechnetz zwischen einem ersten (102) und einem zweiten (112) Benutzer, wobei der erste Benutzer und der zweite Benutzer auf einen ersten (104) und einen zweiten (114) Fernsprechadapter aufgeschaltet werden, die wiederum an eine erste (106) bzw. zweite (116) Netzübergangssteuerung angeschlossen sind, wobei die Netzübergangssteuerungen den Benutzerzugriff auf das IP-Fernsprechnetz steuern, und wobei die Fernsprechadapter Benutzerinformation ver- und entschlüsseln, die über das IP-Fernsprechnetz ausgetauscht wird, wobei das Verfahren umfasst:
- Empfangen eines Abrufs (316) an der ersten Netzübergangssteuerung (106) zum Herstellen eines sicheren Kommunikationskanals zwischen dem ersten Benutzer (102) und zweiten Benutzer (112);
- Generieren (408) eines Geheimschlüssels an der ersten Netzübergangssteuerung (106);
- Verteilen (410, 418) des Geheimschlüssels an den ersten und zweiten Fernsprechadapter über zuvor hergestellte sichere Verbindungen; und
- Herstellen (422) des sicheren Kommunikationskanals (144) zwischen dem ersten Benutzer (102) und dem zweiten Benutzer (112) durch Ver- und Entschlüsseln von Information unter Verwendung des Geheimschlüssels;
- wobei der sichere Kanal (144) direkt zwischen dem ersten und zweiten Fernsprechadapter bereitgestellt wird.

2. Verfahren nach Anspruch 1, wobei der Schritt des Generierens einen Schritt des Generierens einer Zufallszahl an der ersten Netzübergangssteuerung umfasst, die als der Geheimschlüssel verwendet werden soll.

3. Verfahren nach Anspruch 1, wobei der Schritt des Generierens einen Schritt des Ableitens des Geheimschlüssels an der ersten Netzübergangssteuerung umfasst, wobei der Geheimschlüssel von einem zwischen dem ersten Fernsprechadapter und der ersten Netzübergangssteuerung gemeinsam genutzten Signalisierungsschlüssel abgeleitet wird.

4. Verfahren nach Anspruch 1, wobei der Schritt des Verteilens folgende Schritte umfasst:
- Übertragen des Geheimschlüssels von der ersten Netzübergangssteuerung zur zweiten Netzübergangssteuerung;
- Übertragen des Geheimschlüssels von der zweiten Netzübergangssteuerung zum zweiten Fernsprechadapter;
- Übertragen des Geheimschlüssels von der ersten Netzübergangssteuerung zum ersten Fernsprechadapter.

5. Verfahren nach Anspruch 1, darüber hinaus folgende Schritte umfassend:
- Empfangen eines Abrufs an der ersten Netzübergangssteuerung, den Geheimschlüssel einem Rechtsdurchsetzungsserver bereitzustellen; und
- Bereitstellen des Geheimschlüssels an den Rechtsdurchsetzungsserver.

6. IP-Fernsprechnetz zum Herstellen eines sicheren Kommunikationskanals (144) zwischen einem ersten Benutzer (102) und einem zweiten Benutzer (112), wobei der erste Benutzer (102) und der zweite Benutzer auf einen ersten (104) und einen zweiten (114) Fernsprechadapter aufgeschaltet sind, die wiederum an eine erste (106) bzw. zweite (116) Netzübergangssteuerung angeschlossen sind, wobei die Netzübergangssteuerungen den Benutzerzugriff auf ein IP-Fernsprech-Backbone steuern, und wobei die Fernsprechadapter Benutzerinformation ver- und entschlüsseln, die über das IP-Fernsprechnetz ausgetauscht wird, wobei das IP-Fernsprechnetz umfasst:
- eine Einrichtung (202) Empfangen eines Abrufs (316) an der ersten Netzübergangssteuerung (106) zum Herstellen des sicheren Kommunikationskanals (144) zwischen dem ersten Benutzer (102) und zweiten Benutzer(112);
- eine Einrichtung (204) zum Generieren eines Geheimschlüssels an der ersten Netzübergangssteuerung;
- eine Einrichtung zum Verteilen des Geheimschlüssels an den ersten und zweiten Fernsprechadapter über eine zuvor hergestellte sichere Verbindung; und
- eine Einrichtung am ersten (104) und zweiten (114) Fernsprechadapter zum Herstellen des sicheren Kommunikationskanals zwischen dem ersten Benutzer (102) und dem zweiten Benutzer (112) durch Ver- und Entschlüsseln von Information unter Verwendung des Geheimschlüssels,
- wobei der sichere Kanal (144) direkt zwischen dem ersten (104) und zweiten (114) Fernsprechadapter bereitgestellt wird.

## Revendications

1. Procéder pour établir un canal de communication sécurisée (144) dans un réseau de téléphonie sur IP entre un premier (102) et un second (112) utilisateur, les premier et second utilisateurs étant couplés à des premier (104) et second (114) adaptateurs de téléphonie, qui sont à leur tour couplés à des première (106) et seconde (116) commandes de passerelle, respectivement, les commandes de passerelle commandant un accès d'utilisateur au réseau de téléphonie sur IP, et les adaptateurs de téléphonie cryptant et décryptant des informations d'utilisateur échangées sur le réseau de téléphonie sur IP, le procédé étant **caractérisé en ce qu'**il comprend les étapes consistant à :
- recevoir une requête (316) au niveau de la première commande de passerelle (106) pour établir un canal de communication sécurisée entre le premier (102) et le second (112) utilisateur ;
- créer (408) une clé secrète au niveau de la première commande de passerelle (106) ;
- distribuer (410, 418) la clé secrète aux premier et second adaptateurs de téléphonie sur des connexions sécurisées établies préalablement ; et
- établir (422) le canal de communication sécurisée (144) entre le premier utilisateur (102) et le second utilisateur (112) en cryptant et décryptant des informations en utilisant la clé secrète ;
- le canal sécurisé (144) étant agencé directement entre les premier et second adaptateurs de téléphonie.

2. Procédé selon la revendication 1, dans lequel l'étape de création comprend une étape consistant à créer un nombre aléatoire au niveau de la première commande de passerelle, à utiliser en tant que clé secrète.

3. Procédé selon la revendication 1, dans lequel l'étape de création comprend une étape consistant à dériver la clé secrète au niveau de la première commande de passerelle, dans lequel la clé secrète est dérivée d'une clé de signalisation partagée entre le premier adaptateur de téléphonie et la première commande de passerelle.

4. Procédé selon la revendication 1, dans lequel l'étape de distribution comprend les étapes consistant à :
- transmettre la clé secrète depuis la première commande de passerelle à la seconde commande de passerelle ;
- transmettre la clé secrète depuis la seconde commande de passerelle au second adaptateur de téléphonie ;
- transmettre la clé secrète depuis la première commande de passerelle au premier adaptateur de téléphonie.

5. Procédé selon la revendication 1, comportant en outre les étapes consistant à :
- recevoir une requête au niveau de la première commande passerelle pour fournir la clé secrète à un serveur d'application de la loi ; et
- fournir la clé secrète au serveur d'application de la loi

6. Réseau de téléphonie sur IP pour établir un canal de communication sécurisée (144) entre un premier (102) et un second (112) utilisateur, les premier et second utilisateurs étant couplés à des premier (104) et second (114) adaptateurs de téléphonie, qui sont à leur tour couplés à des première (106) et seconde (116) commandes de passerelle, respectivement, les commandes de passerelle commandant un accès d'utilisateur à un réseau de téléphonie sur IP, et les adaptateurs de téléphonie cryptant et décryptant des informations d'utilisateur échangées sur le réseau de téléphonie sur IP, le réseau de téléphonie sur IP comportant :
- des moyens (202) pour recevoir une requête (316) au niveau de la première commande de passerelle (106) pour établir un canal de communication sécurisée (144) entre le premier (102) et le second (112) utilisateur ;
- des moyens (204) pour créer (408) une clé secrète au niveau de la première commande de passerelle ;
- des moyens pour distribuer la clé secrète aux premier et second adaptateurs de téléphonie sur une connexion sécurisée établie préalablement ; et
- des moyens situés au niveau des premier (104) et second (114) adaptateurs de téléphonie, pour établir le canal de communication sécurisée entre le premier utilisateur (102) et le second utilisateur (112) en cryptant et décryptant des informations en utilisant la clé secrète ;
- le canal sécurisé (144) étant agencé directement entre les premier (104) et second (114) adaptateurs de téléphonie.
